# EUROPEAN PATENT APPLICATION

(11) **EP 4 742 071 A1**
(43) Date of publication of application: **13.05.2026**
(21) Application number: 24835813.7
(22) Date of filing: 28.05.2024
(51) Int. Cl.: G06F 21/60, G06Q 40/08

(54) **DATA RELAY SYSTEM**

(30) Priority: 06.07.2023 JP 2023111805
(71) Applicant: ID Holdings Corporation, Tokyo, 102-0076 (JP)
(72) Inventor: MAKINO Takeaki, Tokyo 102-0076 (JP)
(74) Representative: Hasegawa, Kan
(86) International application number: PCT/JP2024/019531
(87) International publication number: WO 2025/009292

(57) **Abstract**

An insurance company can set an appropriate cyber insurance premium. A data relay device relaying data to be communicated between internal terminals in a network and an external terminal also transmits the data to a data block transmission device. The data block transmission device generates data block as a collection of multiple pieces of data received from the data relay device and transmits the data block to a node in a blockchain network to store the data block into the block chain network. This allows the data communicated between the internal terminals in the network and the external terminal to be stored into the blockchain network. The cause or the responsibility for intrusion into the network is thus revealed by examining the data. The insurance company can set an appropriate insurance premium that is reasonably determined based on cyber risks estimated at the time of the contract.

## Description

### BACKGROUND OF INVENTION

### Field of the Invention

The present invention relates to a technique for relaying data to be communicated between multiple processing terminals, including processing terminals that can communicate with one another inside a network and a processing terminal outside the network.

### Background Art

Advancements in computer technology and information communication technology have allowed various servers and processing terminals to be connected with one another for communication and to collectively form a network system. The network system (simply referred to as the network) is further connected to external processing terminals or other networks for communication through the Internet. This allows collection and use of a large volume of various items of information, while raising risks (hereafter, cyber risks) of major losses from external intrusion into the network, including confidential information being extracted or important information being tampered or destroyed.

Insurance companies offer cyber insurance against such cyber risks. Cyber insurance is a type of insurance under which a policyholder having a contract with an insurance company in advance and paying the insurance premium can be partly or fully compensated by the insurance company for losses from external intrusion into the network. The insurance premium to be paid to the insurance company is determined based on the magnitude of cyber risks (the possibility of losses or the extent of damage) or the level of compensation for the resultant losses. However, the magnitude of cyber risks greatly depends on the state of communication between the network and external devices. With difficulty in accurately estimating the magnitude, the insurance company tends to estimate greater cyber risks and set a larger the insurance premium.

A technique has been developed for allowing an insurance company to monitor, before accepting a cyber insurance contract, the communication state of a network covered by the contract over a predetermined period and estimate the magnitude of cyber risks based on the monitoring results to set an appropriate insurance premium (Patent Literature 1).

### CITATION LIST

### PATENT LITERATURE

Patent Literature 1: Japanese Patent No. 7276480

### SUMMARY OF INVENTION

### TECHNICAL PROBLEM

However, setting an appropriate insurance premium of cyber insurance with the known technique described above remains a challenge for the reasons below. After concluding a cyber insurance contract, the administrator of a network tends to reduce efforts in protection against cyber risks because the resultant losses are partly or fully compensated by the insurance company. Measures can be insufficient against intrusion or the spread of losses after an event of intrusion. Thus, cyber risks may increase after a cyber insurance contract is concluded. For losses resulting from an actual event of external intrusion, the insurance company investigates the policyholder of the cyber insurance (typically, the administrator of a network) for negligence before compensating for the losses. When negligence is found, the compensation is decreased. This may cause the policyholder of cyber insurance to provide minimum information to the insurance company or hide inconvenient information. The insurance company may be requested to compensate for the losses from the negligence of the policyholder of the cyber insurance. As described above, cyber insurance may face increased cyber risks after the cyber insurance contract is concluded or may be requested to compensate for losses from the negligence of the policyholder. The insurance company thus tends to estimate greater cyber risks and set a larger insurance premium.

In response to the above issue with the known technique, one or more aspects of the present invention are directed to a technique for allowing an insurance company to set an appropriate insurance premium of cyber insurance.

### SOLUTION TO PROBLEM

A data relay system according to one or more aspects of the present invention has the structure below. A data relay system relays data to be communicated between a plurality of internal terminals and an external terminal. The plurality of internal terminals are processing terminals to communicate data with one another inside a network. The external terminal is a processing terminal outside the network. The data relay system includes a data relay device that relays the data between the plurality of internal terminals. The data relay device may also relay the data between one of the internal terminals and the external terminal. The data relay system includes the data relay device and a data block transmission device connected to the data relay device and to at least one node of a plurality of nodes included in a blockchain network outside the network in which the plurality of internal terminals communicate data with one another. The data block transmission device receives the data relayed by the data relay device to generate data block being a collection of pieces of the data, and transmits the data block to the at least one node in the blockchain network.

In the data relay system according to the above aspect of the present invention, data to be communicated between the internal terminals (or between one of the internal terminals and the external terminal) is transmitted from the data relay device to the data block transmission device. The data block transmission device then generates data block as a collection of multiple data pieces in the received data and transmits the data block to the node in the blockchain network. The node then generates data block in the form of multiple pieces of data block connected in a chain by adding, to a piece of the received data block, information for specifying a piece of data block that has been received immediately before the received data block. The generated data block is stored into the blockchain network. The multiple pieces of data block being connected in a chain may be hereafter referred to as being in a blockchain form, and the data block in a blockchain form may be referred to as chained data block.

In this manner, data communicated between the internal terminals in the network and the external terminal is stored into the blockchain network. The data stored in the blockchain network is known to be highly difficult to tamper with. Thus, in an event of intrusion into the network, the cause or the responsibility for the intrusion can be revealed by examining data stored in the blockchain network. Thus, when an insurance company offers cyber insurance including a contract condition that the insured network is to include the data relay system according to one or more aspects of the present invention, the insurance company can avoid compensating for losses from the negligence of a policyholder. Additionally, the policyholder is not to be fully compensated for losses from the negligence of the policyholder. Thus, the policyholder having concluded the cyber insurance contract is less likely to reduce efforts to prepare for cyber risks or to minimize losses after an event of intrusion into the network. This can reduce the tendency of increased cyber risks or losses after a cyber insurance contract is concluded. For these reasons, the insurance company can set an appropriate insurance premium that is reasonably determined based on the cyber risks estimated at the time of the cyber insurance contract.

In the data relay system according to the above aspect of the present invention, the data relay device may relay data to be communicated between a first internal terminal and a second internal terminal of the plurality of internal terminals. The data block transmission device may generate the data block including the data to be communicated between the first internal terminal and the second internal terminal and transmit the data block to the at least one node.

After an event of intrusion into the network, losses can occur or spread often through communication between the internal terminals in the network. Thus, data communicated between the internal terminals after the intrusion into the network may also be transmitted to the data block transmission device and stored into the blockchain network. This can reveal the cause and the responsibility for the spread of losses in addition to the cause and the responsibility for the occurrence of losses.

In the data relay system according to the above aspect of the present invention, the data block transmission device generating data block may select data from the data transmitted from the data relay device as described below to generate data block. That is to say, the data block transmission device having received data from the data relay device determines whether the data is predetermined accumulation suspension data. The received data is accumulated until the accumulation suspension data is received. When the received data is determined to be the accumulation suspension data, data accumulation is suspended and data block is generated using the accumulated data. After data accumulation is suspended, the determination is performed, each time data is received from the data relay device, as to whether the data is predetermined accumulation resumption data. When the received data is the accumulation resumption data, data is accumulated until the accumulation suspension data is received again.

Data to be communicated between multiple processing terminals may include information that may be confidential. Policyholders of cyber insurance policies may be reluctant to store data block including such data in a blockchain network. In a common practice of transmitting data that may be confidential, such data is not immediately transmitted to a receiver processing terminal. In advance, procedural data is transmitted and received to confirm that the receiver processing terminal can receive data, then the data including items that may be confidential is transmitted. Thus, the multiple processing terminals tend to repeat sequential transmission and reception of the procedural data followed by sequential transmission of no-procedural data (intended data for transmission). In the data block transmission device, data with which the procedural data ends is stored as the accumulation suspension data, and data with which the procedural data starts is stored as the accumulation resumption data. Data block is then generated using, among the data transmitted continuously from the data relay device, data pieces transmitted between the accumulation resumption data and the accumulation suspension data, and is stored into the blockchain network. In this manner, the blockchain network stores no item that may be confidential, and at an event of intrusion into the network, the cause and the responsibility for the intrusion can be revealed by examining the data stored in the blockchain network. The simple process of generating data block using data pieces between the accumulation resumption data to the accumulation suspension data in the data transmitted continuously from the data relay device can generate the data block including data to be used while excluding data that may be confidential. Additionally, while data is being accumulated, the simple determination may be performed as to whether the data corresponds to the accumulation suspension data. While the data accumulation is being suspended, the simple determination may be performed as to whether the data corresponds to the accumulation resumption data. This can simplify and accelerate the determination compared with determining whether the data is to be stored for every piece of data.

In the data relay system according to the above aspect of the present invention, a first processing terminal may establish a connection with a second processing terminal before starting communication with the second processing terminal. In this system, in response to a new connection being established in parallel with the established connection, the data block transmission device may, for each connection, accumulate the data, generate the data block, and transmit the data block to the node.

Thus, when multiple connections are established between the internal terminals in the network or between the external terminal and the internal terminals, data block including data to be used can be generated while eliminating data that may be confidential for each connection, and the generated data block can be stored into the blockchain network.

In the data relay system according to the above aspect of the present invention, the data relay device may select data and transmit the data to the data block transmission device instead of the data block transmission device that selects data from the data transmitted from the data relay device. That is to say, the data relay device relaying data to the internal terminals inside the network or to the external terminal outside the network determines whether the data is predetermined suspension data. The data relay device also transmits the data to the data block transmission device until the suspension data is relayed. After relaying the suspension data, the data relay device suspends data transmission to the data block transmission device. After data transmission to the data block transmission device is suspended, the determination is performed, each time data is relayed to the internal terminals or the external terminal, as to whether the data is predetermined resumption data. When the data is the resumption data, the data relay device performs data transmission to the data block transmission device until the suspension data is received again.

This system can also store data to be used into the blockchain network without storing items that may be confidential into the blockchain network. Thus, in an event of intrusion into the network, the cause and the responsibility for the intrusion can be revealed by examining the data stored in the blockchain network.

### BRIEF DESCRIPTION OF THE DRAWINGS

FIG. 1 is a schematic diagram of a data relay system 10 according to a first embodiment.
FIG. 2 is a sequence diagram showing the operation of the data relay system 10 according to the first embodiment storing data block into a node 51a in a blockchain network 50.
FIG. 3 is a diagram of a data block transmission device 30 in the first embodiment, generating data block and storing the data block into multiple nodes 51a to 51d in the blockchain network 50.
FIG. 4 is a block diagram of a data block transmission device 30 in a data relay system 10 according to a second embodiment.
FIG. 5 is a flowchart of a data block transmission process performed by the data block transmission device 30 in the second embodiment.
FIG. 6 is a sequence diagram showing the operation of the data relay system 10 according to the second embodiment storing data block into a node 51a in a blockchain network 50.
FIG. 7 is a sequence diagram showing the operation of the data relay system 10 according to the second embodiment storing data block into the node 51a in the blockchain network 50.
FIG. 8 is a block diagram of a data relay device 20 included in a data relay system 10 according to a modification of the second embodiment.
FIG. 9 is a flowchart of a data block generation process performed by a data block transmission device 30 in another aspect of the second embodiment.

### DETAILED DESCRIPTION

### A. First Embodiment

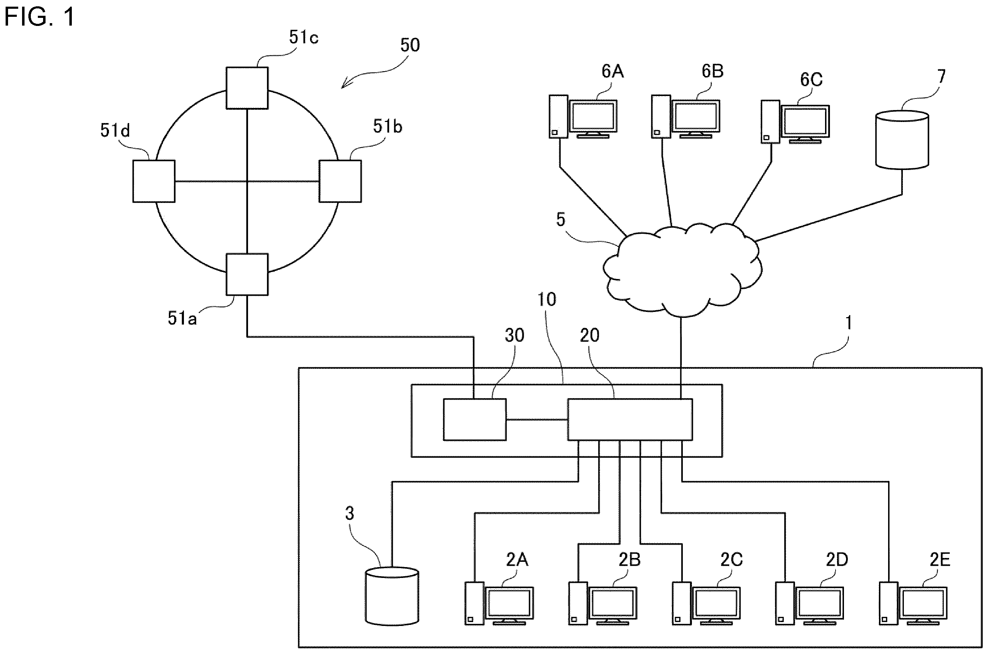

FIG. 1 is a schematic diagram of a data relay system 10 according to a first embodiment. The data relay system 10 includes a data relay device 20 and a data block transmission device 30 as shown in the figure. The data relay device 20 is connected to multiple processing terminals 2A to 2E and a server 3 for communication. Thus, any one of the processing terminals 2A to 2E and the server 3 can transmit and receive data to and from another one of the processing terminals 2A to 2E and the server 3 through the data relay device 20. The processing terminals 2A to 2E and the server 3 collectively form a local area network (LAN) 1. The data relay device 20 is also connected to an Internet 5. The multiple processing terminals 2A to 2E and the server 3 in the LAN 1 can transmit and receive data, through the data relay device 20, to and from processing terminals 6A to 6C and a server 7 connected to the Internet 5.

The processing terminals 2A to 2E and the server 3 inside the LAN 1 are hereafter referred to as internal terminals, and the processing terminals 6A to 6C and the server 7 outside the LAN 1 are referred to as external terminals to distinguish the terminals inside and outside the LAN 1. The processing terminals 2A to 2E or the server 3 may be referred to as internal terminals 2A to 2E or an internal server 3 for distinction among the internal terminals. Similarly, the processing terminals 6A to 6C or the server 7 may be referred to as external terminals 6A to 6C or an external server 7 for distinction among the external terminals.

The data relay device 20 in the first embodiment is connected to the data block transmission device 30. Each time data transmitted and received between the internal terminals in the LAN 1 is relayed, the data relay device 20 transmits the data to the data block transmission device 30. Similarly, each time data transmitted and received between the internal terminals in the LAN 1 and the external terminals outside the LAN 1 is relayed, the data relay device 20 transmits the data to the data block transmission device 30.

The data block transmission device 30 is also connected to a blockchain node (hereafter, simply a node) 51a forming a blockchain network 50. The blockchain network is a distributed network formed by multiple computers to implement a blockchain database. The distributed network is a network including equally connected multiple computers without a central computer. The multiple computers that form the blockchain network are referred to as blockchain nodes. The blockchain database is a database storing data in a blockchain form, with data pieces being grouped into a block of data pieces referred to as data block. As described above, being in a blockchain form refers to a state that multiple pieces of data block are linked linearly like a chain with information for specifying an immediately previous piece of data block. Typically, a hash value of the immediately previous piece of data block is used as to the information for specifying the immediately previous piece of data block. As described above, the data block in a blockchain form is herein referred to as chained data block.

A blockchain database includes multiple pieces of chained data block linked linearly. Thus, a change in a data piece in the chained data block is to cause an immediately after data block of chained data block (referred to as a subsequent chained data block in this example) to have a change of the information to specify the previous chained data block (that is, the chained data block with changed internal data piece). When the information that specifies the previous chained data block is changed in the subsequent chained data block, the information in a next subsequent chained data block to specify the subsequent chained data block has to be changed. Thus, in a blockchain database, when any data piece in chained data block is changed at a later date, all the chained data block after the changed chained data block are to be changed, reducing the likelihood of data tampering. Additionally, a blockchain database includes multiple blockchain nodes (hereafter, nodes) that store identical information. Although all the chained data block stored in a single node are changed, the chained data block stored in the other nodes (at least a half of all nodes or more) is to be changed as well. Otherwise, a change in the data is detectable. Blockchain databases are thus known to be highly difficult to tamper with.

Each time the data relay device 20 relays data, the data block transmission device 30 receives the data, generates data block using the data, and transmits the data block to the node 51a. In response to receiving the data block from the data block transmission device 30, the node 51a generates chained data block by adding, for example, a hash value to the data block, stores the chained data block, and transfers the chained data block to other nodes 51b to 51d included in the blockchain network 50. The other nodes 51b to 51d thus store the same chained data block as the node 51a. In this manner, data relayed by the data relay device 20 is stored into the multiple nodes 51a to 51d in the blockchain network 50. Although the blockchain network 50 includes the four nodes 51a to 51d in this example, the blockchain network 50 may include more nodes.

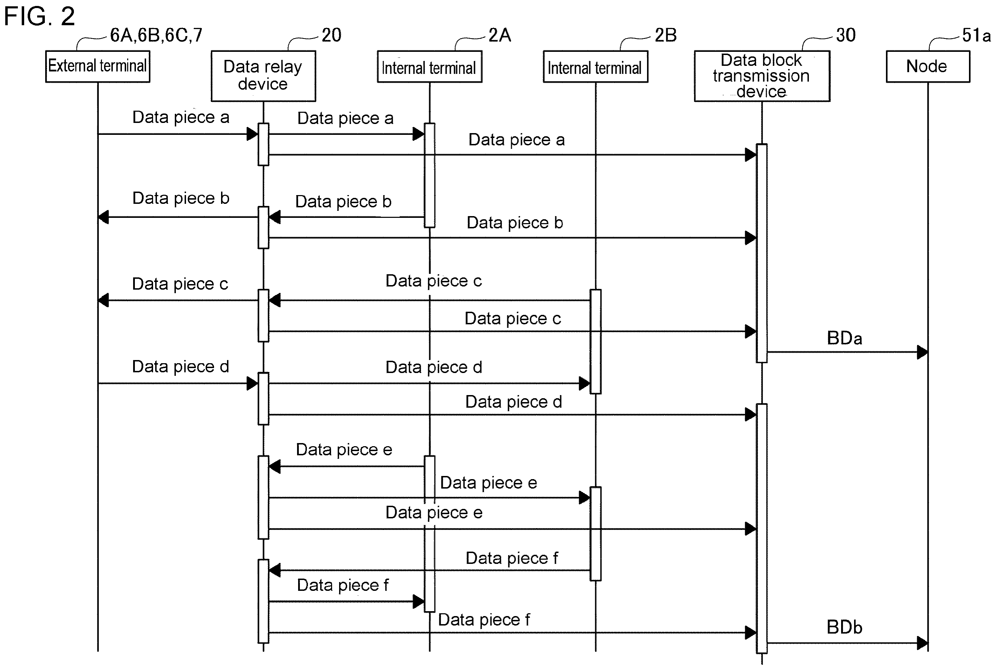

FIG. 2 is a sequence diagram showing the operation of the data relay system 10 according to the first embodiment storing data block into the node 51a in the blockchain network 50. In FIG. 2, the data relay device 20 relays six data pieces "a" to "f", and the data block transmission device 30 receiving the data pieces "a" to "f" transmits data block BDa and data block BDb to the node 51a.

The data piece "a" shown in FIG. 2 is transmitted toward the internal terminal 2A from any of the external terminals 6A to 6C and 7. The data piece "a" is received by the data relay device 20 and is then transmitted from the data relay device 20 to the internal terminal 2A. The data relay device 20 relays the data piece "a" and also transmits the data piece "a" to the data block transmission device 30. The data piece "b" is transmitted from the internal terminal 2A having received the data piece "a" toward the external terminal that transmitted the data piece "a". The data piece "b" is received by the data relay device 20 and is then transmitted from the data relay device 20 to the external terminal. The data relay device 20 relays the data piece "b" and also transmits the data piece "b" to the data block transmission device 30.

The data piece "c" is transmitted from the internal terminal 2B toward any of the external terminals 6A to 6C and 7. The data piece "d" is transmitted toward the internal terminal 2B from the external terminal that has received the data piece "c". The data piece "e" is transmitted from the internal terminal 2A toward the internal terminal 2B. The data piece "f' is transmitted toward the internal terminal 2A from the internal terminal 2B that has received the data piece "e". The data relay device 20 relays these data pieces "c" to "f' and also transmits the data pieces "c" to "f" to the data block transmission device 30.

The data block transmission device 30 accumulates data pieces transmitted from the data relay device 20 and generates data block that is a collection of the accumulated data pieces when a predetermined condition is satisfied. The predetermined condition may be, for example, the number of data pieces accumulated in the data block transmission device 30 reaching a predetermined accumulation number. The accumulation number is set to three in the example shown in FIG. 2. Thus, in response to receiving the data piece "c", the data block transmission device 30 generates the data block BDa using the three data pieces "a" to "c" and transmits the data block BDa to the node 51a. Similarly, in response to receiving the data piece "f", the data block transmission device 30 generates the data block BDb using the three pieces of data d to f and transmits the data block BDb to the node 51a.

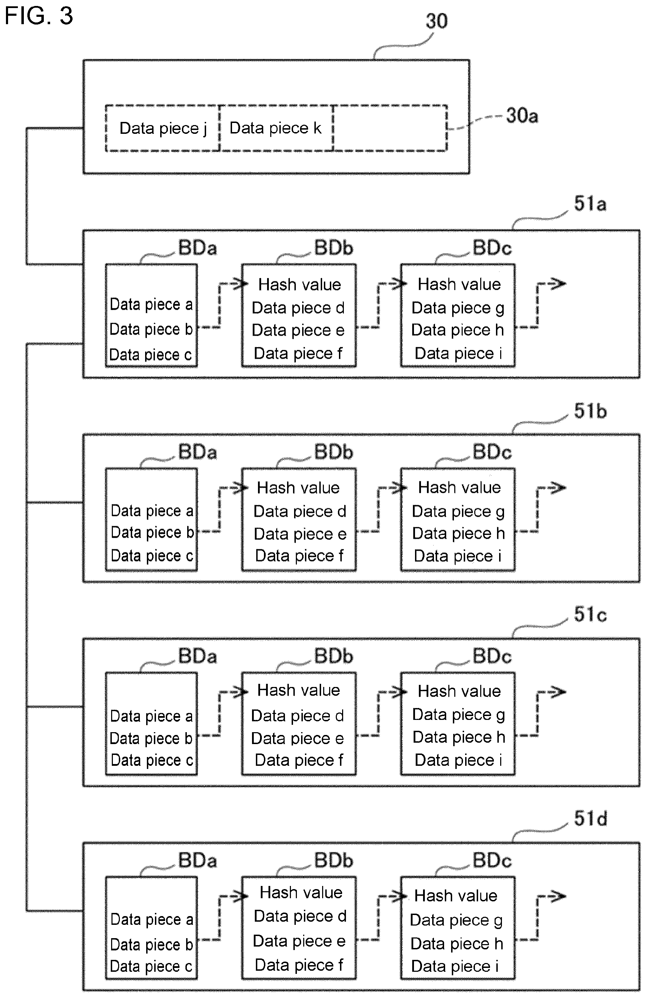

FIG. 3 is a diagram of the data block transmission device 30 in the first embodiment, generating data block and storing the data block into the multiple nodes 51a to 51d in the blockchain network 50. As shown in FIG. 3, the data block transmission device 30 in the first embodiment includes a storage area 30a for storing data received from the data relay device 20, and can store data pieces up to the predetermined accumulation number (three in this example).

The data pieces provided from the data relay device 20 are accumulated in the storage area 30a. When the number of accumulated data pieces reaches the predetermined accumulation number (three in this example), the data block transmission device 30 transmits data block as a collection of the data pieces to the node 51a. The data block transmission device 30 may encrypt the data pieces stored in the storage area 30a before generating the data block. With the data block being encrypted, the data block including confidential data can be stored into the multiple nodes 51a to 51d in the blockchain network 50 while maintaining the confidentiality. In some embodiments, the data pieces stored in the storage area 30a may be signed with the signature of an administrator of the LAN 1 before the data block is generated. This ensures that the administrator of the LAN 1 has intentionally generated the data block. The signature may be affixed using a known method such as asymmetric key cryptography.

The node 51a that has received the data block from the data block transmission device 30 transfers the received data block to the other nodes 51b to 51d connected to the node 51a. The node 51a, which stores the previously received data block in a blockchain form, calculates a hash value of the most recently stored chained data block and adds the hash value to the new data block to generate chained data block. The hash value is obtained through a special operation called a hash function performed on a piece of data. The hash function converts data of any size to a hash value with a fixed data length. When data before conversion includes difference in any part, the conversion produces a completely different hash value. Thus, the hash value and the original data have a one-to-one relationship, and the hash value thus uniquely indicates the data before the conversion. The hash value cannot be used to restore the data before the conversion.

Similarly to the node 51a, the other nodes 51b to 51d that have received the data block from the node 51a also calculate a hash value of the most recently stored chained data block and add the hash value to the new data block to generate chained data block. The pieces of chained data block generated by the nodes 51a to 51d are then identified to be identical to one another. Each of the nodes 51a to 51d then stores the chained data block. When the nodes 51a to 51d receive data block for the first time, the nodes 51a to 51d store no chained data block and can calculate no hash value for chained data block. The nodes 51a to 51d receiving data block for the first time thus store the data block in place of chained data block. FIG. 3 shows the nodes 51a to 51d each storing the data block BDa, the chained data block BDb, and the chained data block BDc as described above. The chained data block BDb includes a hash value indicating the data block BDa. The chained data block BDc includes a hash value indicating the chained data block BDb. In this manner, the nodes 51a to 51d store chained data block in a blockchain form.

In FIG. 3 described above, the data block transmission device 30 simply transmits data block, and the nodes 51a to 51d generate chained data block from the data block. The data block transmission device 30 may, however, generate chained data block from the data block and transmit the chained data block to the node 51a. For example, the data block transmission device 30 includes a storage area for storing hash values. When data pieces are accumulated in the storage area 30a that stores data from the data relay device 20, the data pieces are collected into data block. A hash value stored in the storage area is added to the data block. Thus, chained data block is generated and transmitted to the node 51a. In transmitting chained data block, the hash value of the chained data block is calculated and stored into the storage area in the data block transmission device 30. In this manner, the nodes 51a to 51d can store data in a blockchain form by simply storing the transmitted chained data block.

The data relay system 10 in the first embodiment stores data relayed by the data relay device 20 into the nodes 51a to 51d in the blockchain network 50 as described above. This allows the insurance company to set an appropriate insurance premium for cyber insurance. This will be described below.

As described above, one of the reasons that an insurance company cannot set an appropriate insurance premium of cyber insurance is that a policyholder with a cyber insurance contract feels protected by the contract and such a feeling may increase cyber risks and losses. Additionally, when losses occur, the policyholder may not fully cooperate with the insurance company trying to investigate the policyholder for negligence. The insurance company may then be requested to compensate for losses caused by the negligence of the policyholder. This also serves as one of the reasons that the insurance company cannot set an appropriate insurance premium.

However, the insurance company offering the cyber insurance contract may include, in its contract conditions, the LAN 1 including the data relay system 10 according to the first embodiment. That allows to store the data relayed by the data relay device 20 into the blockchain network 50. The data stored in the blockchain network 50 is highly difficult to tamper with, and is also stored in the order of data generation (in other words, in the order of communication through the data relay device 20). Thus, for losses caused after concluding the cyber insurance contract, the insurance company can examine the data stored in the blockchain network 50 to identify the details and the cause for the occurrence of losses, and thus can easily determine whether the policyholder is negligent.

The data stored in the blockchain network 50 has been transmitted to the node 51a in the blockchain network 50 from the data block transmission device 30 in the LAN 1 managed by the policyholder. Thus, the data is stored under the control and responsibility of the policyholder. The policyholder is thus more smoothly convinced when the negligence of the policyholder is indicated by the data described above. Thus, the determination as to whether the policyholder is negligent can be easily performed by examining the data stored in the blockchain network 50 after the occurrence of losses.

Additionally, for losses from the negligence of the policyholder, the policyholder is not fully compensated after the negligence is revealed through examination of the data stored in the blockchain network 50. The policyholder is thus less likely to, after concluding the cyber insurance contract, reduce efforts to prepare for cyber risks or to minimize losses after an event of intrusion into the network. This can reduce the tendency of increased cyber risks or losses after the cyber insurance contract is concluded. For the reasons described above, the cyber insurance contract for the network with the data relay system 10 according to the first embodiment allows the insurance company to set an appropriate insurance premium of cyber insurance that is reasonably determined at the time of the contract.

### B. Second Embodiment

In the first embodiment, all data pieces relayed by the data relay device 20 are transmitted to the data block transmission device 30 and stored into the nodes 51a to 51d in the blockchain network 50. However, there are probabilities that some data pieces relayed by the data relay device 20 include confidential information. In the process of concluding a cyber insurance contract, the contract may not be concluded for the reason that data including confidential information is to be stored in the nodes 51a to 51d in the blockchain network 50. Thus, the data without confidential information may be stored in the nodes 51a to 51d in the blockchain network 50. This can be easily achieved with a second embodiment described below.

### B-1. Overview of Data Relay System 10 According to Second Embodiment

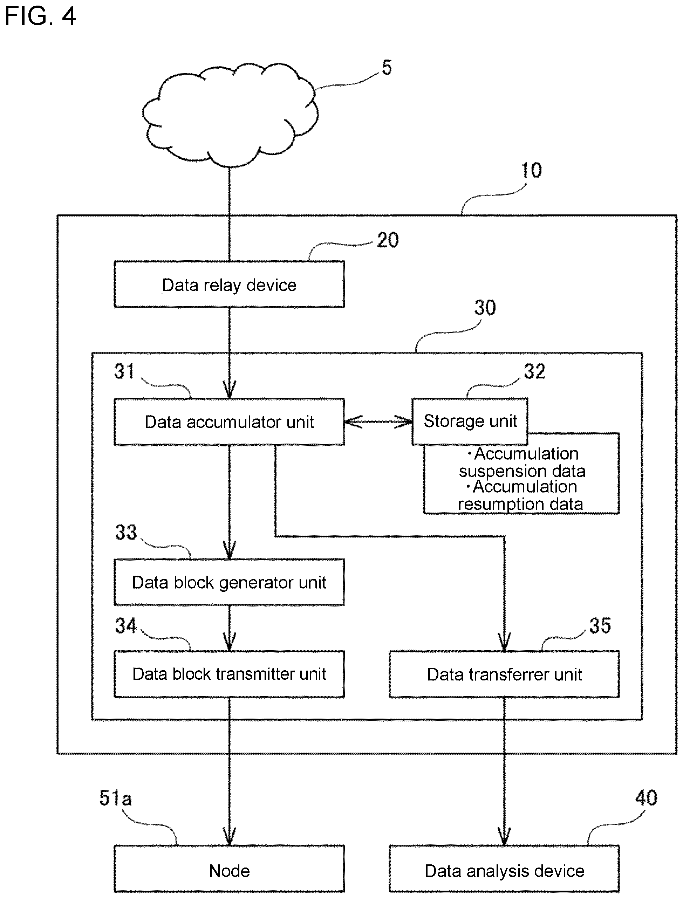

FIG. 4 is a block diagram of a data relay system 10 according to the second embodiment. Similarly to the data relay system 10 according to the first embodiment, the data relay system 10 according to the second embodiment also includes a data relay device 20 and a data block transmission device 30. Although not shown in FIG. 4, the data relay device 20 is connected to internal terminals, and the Internet 5 is connected to external terminals. Similarly to the data relay device 20 in the first embodiment described above with FIG. 1, upon relaying data transmitted and received between the internal terminals or data transmitted and received between the internal terminals and the external terminals, the data relay device 20 in the second embodiment also transmits the data to the data block transmission device 30.

As shown in FIG. 4, the data block transmission device 30 in the second embodiment includes a data accumulator unit 31, a storage unit 32, a data block generator unit 33, and a data block transmitter unit 34. These units are conceptual representations of functions to be included in the data block transmission device 30 in the second embodiment, and may not correspond to actual components. These units can be implemented as a software program executable by a microcomputer included in the data block transmission device 30 or as hardware using large-scale integration (LSI) circuits or integrated circuits (ICs). These units may be implemented by combining the software program and the hardware. Although the data block transmission device 30 shown in FIG. 4 also includes a data transferrer unit 35, the data transferrer unit 35 may be eliminated.

In response to receiving data transmitted from the data relay device 20, the data accumulator unit 31 refers to information stored in the storage unit 32 to determine whether to accumulate the received data. The information stored in the storage unit 32 will be referred later. The data determined to be accumulated is stored into a storage area (not shown) for storing data (hereafter referred to as an accumulation area). The storage unit 32 stores data referred to as accumulation suspension data or data referred to as accumulation resumption data. The accumulation suspension data may not be a single piece of data, and may be stored as multiple pieces of data. And the accumulation resumption data may not be a single piece of data, and may be stored as multiple pieces of data. When data received from the data relay device 20 corresponds to the accumulation suspension data, the data accumulator unit 31 determines not to accumulate data received after the accumulation suspension data. In a state not to accumulate data, when data received from the data relay device 20 corresponds to the accumulation resumption data, the data accumulator unit 31 determines to resume accumulation of the data and subsequent data. The data accumulator unit 31 can avoid accumulating data including confidential information with such a simple method. The reason for the above will be described later.

In a state to accumulate data, at each time the accumulation of data is suspended, the data accumulator unit 31 outputs the data accumulated in its accumulation area (not shown) to the data block generator unit 33. In a case of the data block transmission device 30 including the data transferrer unit 35, the data accumulator unit 31 also outputs the same data to the data transferrer unit 35. In this example, the accumulated data is output to the data block generator unit 33 each time the data accumulation is suspended. However, the accumulated data may be output to the data block generator unit 33 each time the number of accumulated data pieces reaches a predetermined accumulation number as in the first embodiment described above.

After receiving the data accumulated in the data accumulator unit 31 and generating data block, the data block generator unit 33 then outputs the data block to the data block transmitter unit 34. In response to receiving the data block, the data block transmitter unit 34 transmits the data block to the node 51a included in the blockchain network 50. The node 51a transfers the received data block to the other nodes 51b to 51d and adds a hash value to the data block to generate chained data block. Each other nodes 51b to 51d generates the data block with the hash value. And the node 51a compares the data block with the hash value to the other data block with the hash value that be generated in the other nodes 51b to 51d. After making sure that each data block generated in the nodes 51a to 51d is same, the node 51a stores the data block in a blockchain form. In this manner, the nodes 51a to 51d in the blockchain network 50 store data blocks in a blockchain form.

In a case of the data block transmission device 30 including the data transferrer unit 35, the data accumulator unit 31 accumulates data into the accumulation area (not shown) and each time also outputs the data to the data transferrer unit 35. Instead of outputting the accumulated data to the data transferrer unit 35, the data accumulator unit 31 may output data to the data transferrer unit 35 when the same data is output to the data block generator unit 33.

The data transferrer unit 35 is connected to a data analysis device 40. The data analysis device 40 analyzes data relayed by the data relay device 20 to extract suspicious communication suspected as attempting intrusion into the network from outside the network or suspicious communication suspected as preparing for an attack after an intrusion into the network. Successful extraction of such suspicious communication can prevent intrusion into the networks or losses resulting from an attack. Thus, information that allows extraction of suspicious communication is highly economically valuable. The data analysis device 40 thus analyzes data received from the data transferrer unit 35 to extract such useful information.

Advanced and specialized techniques are required to extract such useful information through analysis of the data relayed by the data relay device 20. Thus, extraction of useful information is practically difficult without a company specializing in data analysis. However, the data relayed by the data relay device 20 probably includes confidential information, and providing such data to another company may be difficult to accept. In this point of view, the data stored in the data accumulator unit 31 includes no confidential item but is data from which useful information can be extracted as described later. The data transferrer unit 35 that has received such data from the data accumulator unit 31 transfers the data to the data analysis device 40. Although the data analysis device 40 belongs to a company specializing in analysis, the data transferred to the data analysis device 40 does not cause confidentiality issues. Thus, when the data transferred from the data transferrer unit 35 is analyzed by the data analysis device 40, information useful for reducing cyber risks can be extracted. The data analysis device 40 may be installed within or outside the network including the data relay device 20 serving as a main unit.

### B-2. Data block Transmission Process

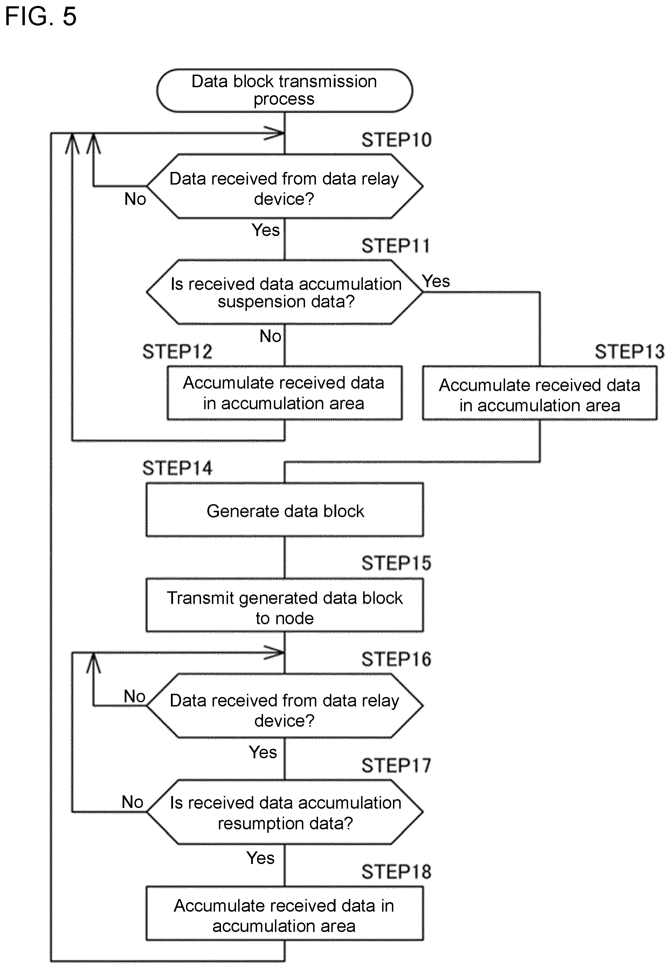

FIG. 5 is a flowchart of a process performed by the data block transmission device 30 in the second embodiment transmitting data block to the node 51a in the blockchain network 50. As shown in FIG. 5, the data block transmission device 30 in the second embodiment first determines whether data is received from the data relay device 20 (STEP 10). When no data is received (No in STEP 10), the determination in STEP 10 is repeated in a standby state until data is received. When data is received (Yes in STEP 10), the determination is performed as to whether the received data is the accumulation suspension data (STEP 11). As described above with reference to FIG. 4, the data block transmission device 30 in the second embodiment prestores the accumulation suspension data and determines whether the data received from the data relay device 20 corresponds to the accumulation suspension data. The accumulation suspension data will be described later.

When the received data does not correspond to the accumulation suspension data (No in STEP 11), the received data is accumulated in the accumulation area (not shown) (STEP 12). The processing returns to the start of the process of determining whether data from the data relay device 20 is received (STEP 10). When data is received (Yes in STEP 10), the determination is performed again as to whether the data corresponds to the accumulation suspension data (STEP 11). Such operations are repeated until the data received from the data relay device 20 is determined to correspond to the accumulation suspension data (Yes in STEP 11). The data (namely, the accumulation suspension data in this case) is then accumulated in the accumulation area (STEP 13). The data pieces accumulated in the accumulation area are then collected to generate data block (STEP 14). The accumulation suspension data will be described below.

When one of two internal terminals in a single network is to transmit data to the other internal terminal, procedural data is typically transmitted to a receiver internal terminal before intended data is transmitted to the receiver internal terminal for reliable transmitting the intended data. This procedural data includes, for example, information indicating the internal terminal that transmits data and the internal terminal that receives data or information indicating the data transmission scheme and the type of data to be transmitted. These items of information included in the procedural data are hereafter referred to as procedural information. The same process is also performed when data is transmitted and received between an internal terminal in the network and an external terminal connected to the Internet. After mutual transmission and reception of such procedural data, data is reliably transmitted and received between the two internal terminals or between the internal terminal and the external terminal. This state is referred to as a connected state. To establish the connected state, multiple data pieces are to be transmitted and received in a predetermined order between internal terminals to be connected or between an internal terminal and an external terminal to be connected. Data transmitted and received after the establishment of the connected state is data including actually intended information (therefor, information that may be confidential). The actually intended information is hereafter referred to as real information.

As described above, the accumulation suspension data in the second embodiment is the data piece lastly transmitted and lastly received for establishing the connection. That data piece is hereafter referred to as the last data piece. When the data relayed by the data relay device 20 is the accumulation suspension data, data subsequently transmitted and received includes real information that may be confidential. Thus, no data may be accumulated. Although multiple schemes can be used to establish connection, any scheme involves transmitting and receiving multiple data pieces in a predetermined order. Thus, the last data piece to be transmitted is fixed for each scheme for establishing connection. Such data pieces may thus be stored as the accumulation suspension data.

In STEP 11 in the data block transmission process shown in FIG. 5, the determination is performed as to whether the data received from the data relay device 20 corresponds to the accumulation suspension data. When the received data corresponds to the accumulation suspension data (Yes in STEP 11), the received data (therefor, the last data piece is accumulated in the accumulation area (STEP 13). The accumulated data is used to generate data block (STEP 14). After generation of the data block, the data accumulated in the accumulation area is erased.

The generated data block is then transmitted to the node 51a in the blockchain network 50 (STEP 15). Subsequently, the determination is performed as to whether data from the data relay device 20 is received (STEP 16). When no data is received (No in STEP 16), the determination in STEP 16 is repeated in the standby state. When the data from the data relay device 20 is received (Yes in STEP 16), the determination is performed as to whether the data is the accumulation resumption data (STEP 17). The accumulation resumption data will be described below.

To establish the connected state, as described above, multiple data pieces are to be transmitted and received in a predetermined order to and from a receiver internal terminal or to and from a receiver external terminal. Similarly, to terminate the connected state, multiple data pieces are to be transmitted and received in a predetermined order to and from the receiver internal terminal or to and from the receiver external terminal. After the first data piece that is transmitted and received to terminate the connected state is transmitted, the first data piece "a"nd the data subsequently transmitted and received are not to include real information that may be confidential items. As described above, the accumulation resumption data in the second embodiment is the first data piece transmitted and received to terminate the established connection. Although multiple schemes can be used to terminate the established connection, any scheme involves transmitting and receiving multiple data pieces in a predetermined order. Thus, the first data piece to be transmitted is fixed for each scheme for terminating the connection. Such data pieces may be stored as the accumulation resumption data.

In STEP 17 in the data block transmission process shown in FIG. 5, the determination is performed as to whether the data received from the data relay device 20 corresponds to the accumulation resumption data. When the received data does not correspond to the accumulation resumption data (No in STEP 17), the received data is not accumulated in the accumulation area. The processing returns to STEP 16 again, and the determination is performed as to whether data from the data relay device 20 is received. The operations described above are then repeated. When the received data corresponds to the accumulation resumption data (Yes in STEP 17), the received data is accumulated in the accumulation area (STEP 18). The processing returns to the start of the process of determining whether data from the data relay device 20 is received (STEP 10). The operations described above are then repeated.

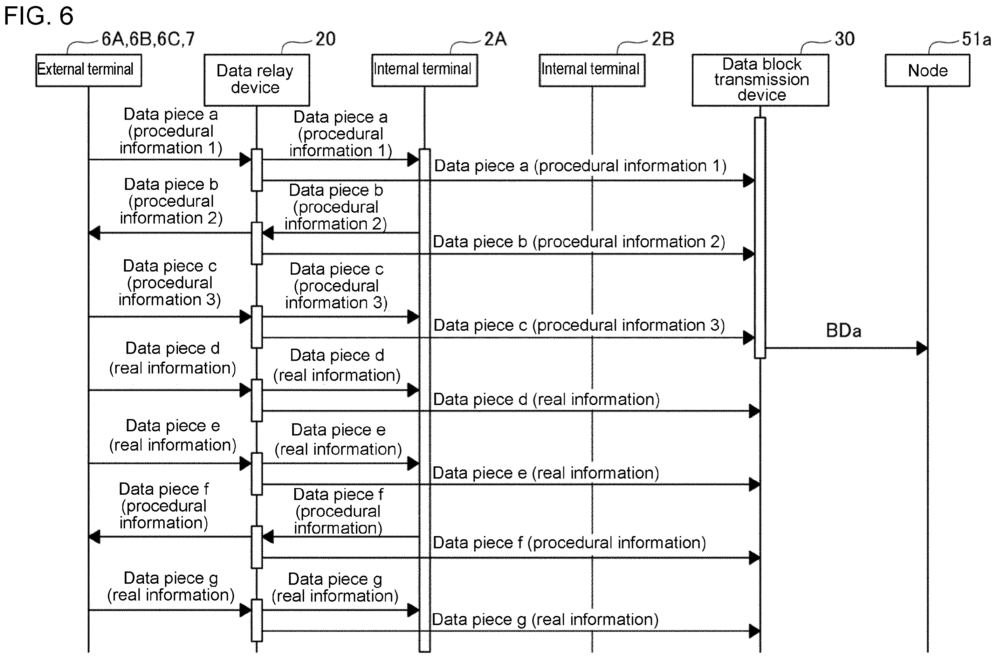

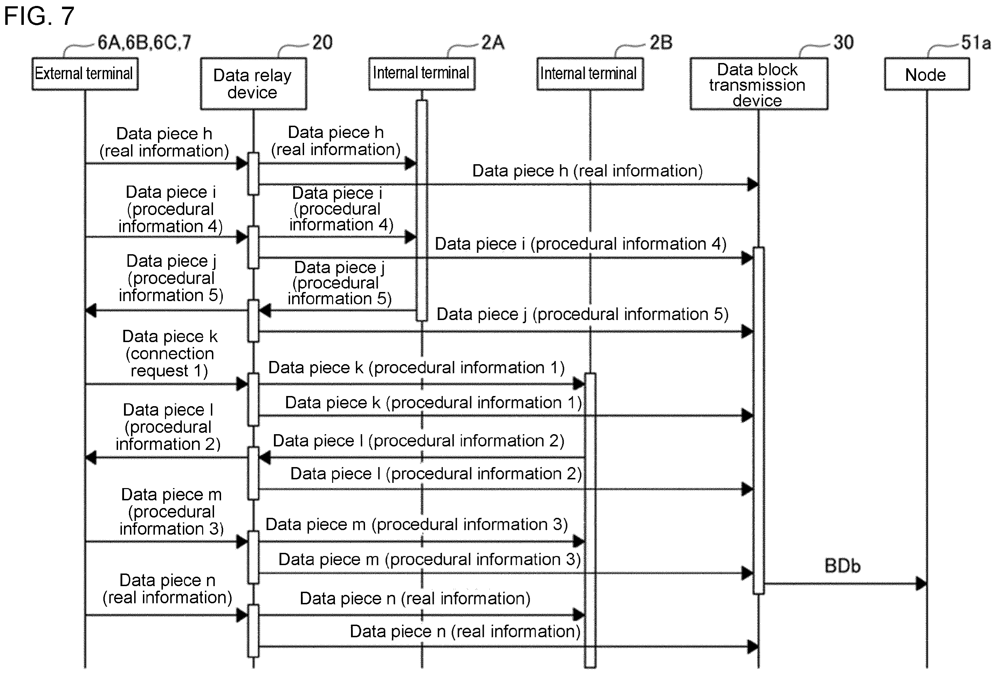

FIGs. 6 and 7 are sequence diagrams each showing data block being stored into the node 51a in the blockchain network 50 through the data block transmission process described above performed by the data block transmission device 30 in the second embodiment. The data piece "a" shown in FIG. 6 is data transmitted by any of the external terminals 6A to 6C and 7 to the internal terminal 2A to request the establishment of connection. The data piece "a" includes connection information 1 such as information requesting the establishment of connection, information identifying the external terminal providing the request, information identifying the internal terminal 2A to be connected, or information indicating a transmission scheme. The data piece "a" transmitted from the external terminal is relayed to the internal terminal 2A by the data relay device 20. The internal terminal 2A having received the data piece "a" transmits the data piece "b" including predetermined connection information 2 corresponding to the data piece "a" toward the external terminal that has transmitted the data piece "a". The data piece "b" is also relayed to the external terminal by the data relay device 20. The external terminal that has received the data piece "b" transmits the data piece "c" including connection information 3 corresponding to the data piece "b" toward the internal terminal 2A. The data piece "c" is also relayed to the internal terminal 2A by the data relay device 20. When the three data pieces "a" to "c" are transmitted and received between the external terminal and the internal terminal 2A, the connected state is established. After the connected state is established, the external terminal transmits data pieces "d", "e", and "g" including real information toward the internal terminal 2A. As the data piece "f" illustrated in FIG. 6, the internal terminal 2A may return, in an interval of receiving the data pieces "d", "e", and "g" including real information, procedural data that includes procedural information indicating, for example, failure (or success) in receiving data.

When the external terminal transmitting the data pieces including real information transmits the last data piece, the external terminal transmits a data piece to terminate the connection established with the internal terminal 2A toward the internal terminal 2A. The data piece "h" shown in FIG. 7 is the last data piece including real information. The data piece "i" is data to terminate the connection. The data piece "i" includes connection information 4 such as information requesting termination of the connection, information identifying the external terminal providing the request, or information identifying the internal terminal 2A being connected. The internal terminal 2A that has received the data piece "i" returns a data piece "j" including predetermined connection information 5 corresponding to the data piece "i". These data pieces "i" and "j" are also relayed by the data relay device 20. When the data pieces "i" and "j" are transmitted and received, the established connection is terminated.

In the example shown in FIG. 7, any of the external terminals 6A to 6C and 7 transmits a data piece "k" toward the internal terminal 2B to request the establishment of connection. The data piece "k" also includes the connection information 1 described above. The data piece "k" transmitted from the external terminal is relayed to the internal terminal 2B by the data relay device 20. The internal terminal 2B that has received the data k transmits a data piece "l" including the connection information 2 corresponding to the data piece "k" toward the external terminal that has transmitted the data piece "k". The external terminal that has received the data piece "l" then transmits a data piece "m" including the connection information 3 corresponding to the data piece "l" toward the internal terminal 2B. This establishes connection between the external terminal and the internal terminal 2B. After the connection is established, the external terminal transmits a data piece "n" including real information toward the internal terminal 2B. The data relay device 20 also relays these data pieces "k" to "n". Each time the data relay device 20 relays data, the data relay device 20 transmits the data to the data block transmission device 30.

The data block transmission device 30 performs the data block transmission process described above with reference to FIG. 5 to generate data block with the data transmitted from the data relay device 20. When the data received from the data relay device 20 is the data piece "a" or the data piece "b" in FIG. 6, for example, the data is not the accumulation suspension data (the last data piece transmitted and received for establishing connection). The determination result is thus negative in STEP 11 in FIG. 5. The data is accumulated in the accumulation area (STEP 12). Subsequently, when the data piece "c" is received from the data relay device 20, the data piece "c" is the accumulation suspension data. The determination result is thus affirmative in STEP 11 in FIG. 5. The data piece "c" is then accumulated into the accumulation area. The data pieces accumulated in the accumulation area are used to generate data block BDa, and the data block BDa is transmitted to the node 51a (STEPs 13 to 15 in FIG. 5).

After the data block BDa is transmitted to the node 51a, the determination is performed, each time data is received from the data relay device 20, as to whether the data is the accumulation resumption data (the first data piece transmitted and received to terminate the connection) (STEP 17 in FIG. 5). The data pieces "d", "e", and "g" shown in FIG. 6 and the data piece "h" shown in FIG. 7 are data for transmitting real information and are not the accumulation resumption data. The determination result is thus negative in STEP 17 in FIG. 5. These data pieces are not accumulated in the accumulation area. The data piece "f" shown in FIG. 6 is procedural data for transmitting procedural information but is not the accumulation resumption data, and thus is not accumulated in the accumulation area.

When the data piece "i" shown in FIG. 7 is received, however, the determination result is affirmative in STEP 17 in FIG. 5. After resuming data accumulation by accumulating the data piece "i" in the accumulation area (STEP 18), subsequent data received from the data relay device 20 is accumulated in the accumulation area (STEP 12 in FIG. 5) unless the received data corresponds to the accumulation suspension data. When the data piece "m" corresponding to the accumulation suspension data is received, the determination result is affirmative in STEP 11 in FIG. 5. The data piece "m" is accumulated in the accumulation area. The data accumulated in the accumulation area is used to generate data block BDb, and the data block BDb is transmitted to the node 51a (STEPs 13 to 15 in FIG. 5). The data block transmission device 30 generates data block and transmits the data block to the node 51a as described above by performing the data block generation process in FIG. 5. The node 51a transmits the received data block to the other nodes 51b to 51d as well. In this manner, the nodes 51a to 51d in the blockchain network 50 store data blocks in a blockchain form.

The data block transmission device 30 in the second embodiment generates data block as described above, and stores the data block into the nodes 51a to 51d in the blockchain network 50. As described above with reference to FIGs. 6 and 7, the data block generated by the data block transmission device 30 in the second embodiment includes procedural information, but includes no real information that may be confidential. This can reduce cases in which a contract is not concluded for the reason that the nodes 51a to 51d in the blockchain network 50 are to store data block with real information. However, the procedural information stored in the data block includes information indicating the internal terminals or the external terminals that transmit and receive data, information about the scheme for transmitting and receiving data, information about the type of transmitted and received data, and information about the order of transmitting and receiving data. Thus, when an external intrusion into the network causes losses, the details and the cause for the occurrence of losses can be identified by examining the data block.

Additionally, the data block transmission device 30 performs the simple process of determining whether the data received from the data relay device 20 corresponds to the accumulation suspension data or the accumulation resumption data. That can generate data block including data to be used for identifying the details and the cause for the occurrence of losses, while excluding data including information that may be confidential. Incidentally, the data including information that may be confidential can be excluded by following things; these are, registering all the procedural data pieces including no real information and determining each time data is received from the data relay device 20 whether the data corresponds to the registered procedural data. In the second embodiment described above, however, the determination may be performed as to whether the data corresponds to the accumulation suspension data while data is being accumulated or as to whether the data corresponds to the accumulation resumption data while data accumulation is being suspended. The data including information that may be confidential can thus be excluded highly easily and promptly.

In FIGs. 6 and 7, the connection between an external terminal and the internal terminal 2B is newly established after termination of the connection having been established between the external terminal and the internal terminal 2A. However, the connection between an external terminal and the internal terminal 2A may remain as being established when new connection is established between, for example, another external terminal and the internal terminal 2B. In this case, the data block transmission process shown in FIG. 5 may be performed for each of the connections. More specifically, when data transferred from the data relay device 20 is received, the connection relevant to the data is identified based on the header information of the data. Then the process shown in FIG. 5 may then be performed for each connection. In this manner, data block can be generated for individual connections while multiple connections are being established.

In the second embodiment described above, the data relay device 20 transmits all the relayed data pieces to the data block transmission device 30, and the data block transmission device 30 selects data to be accumulated. However, the data relay device 20 may select data and transmit the data to the data block transmission device 30. Such a modification of the second embodiment will be described below.

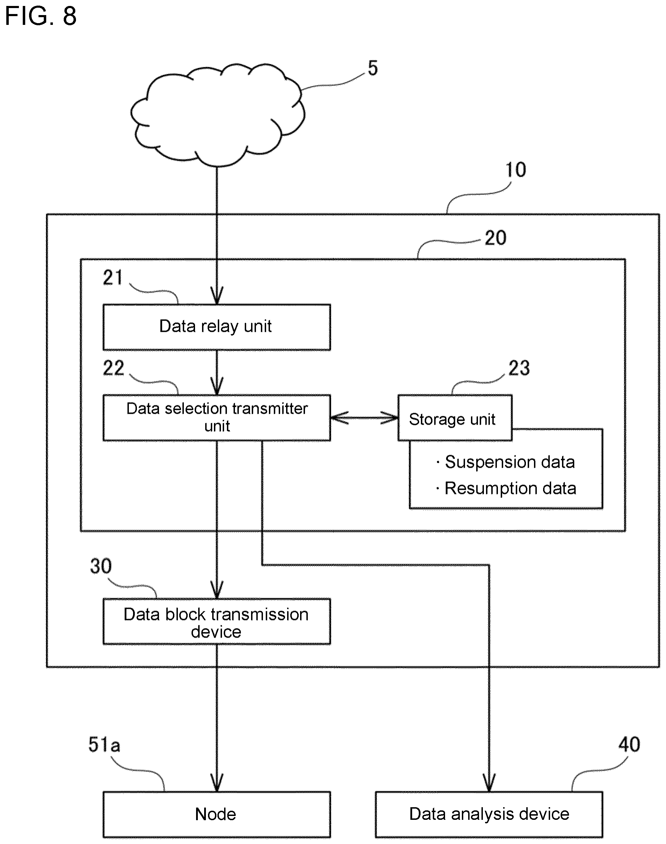

FIG. 8 is a diagram of an example data relay system 10 according to a modification of the second embodiment. The data relay system 10 according to the modification of the second embodiment also includes a data relay device 20 and a data block transmission device 30, similarly to the data relay system 10 according to the first embodiment or the second embodiment. Although not shown in FIG. 8 as in FIG. 4, internal terminals are connected to the data relay device 20, and external terminals are connected to the Internet 5. The data relay device 20 relays data transmitted and received between the internal terminals or data transmitted and received between the internal terminals and the external terminals.

As shown in FIG. 8, the data relay device 20 according to the modification of the second embodiment includes a data relay unit 21, a data selection transmitter unit 22, and a storage unit 23. These units are conceptual representations of functions to be included in the data relay device 20 in another aspect of the second embodiment, and may not correspond to any actual components. These units can be implemented as a software program executable by a computer or as hardware using LSI circuits or ICs.

The data relay unit 21 is connected to internal terminals (not shown) and the Internet 5 and relays data transmitted and received between the internal terminals or data transmitted and received between the internal terminals and external terminals. And the data relay unit 21 also outputs the relayed data to the data selection transmitter unit 22.

In response to receiving data output from the data relay unit 21, the data selection transmitter unit 22 determines whether the data corresponds to predetermined suspension data or predetermined resumption data stored in the storage unit 23. The suspension data may be the same data as the accumulation suspension data described above. The resumption data may be the same data as the accumulation resumption data described above. A state in which data is transmitted to the data block transmission device 30 and a state in which no data is transmitted are switched based on the determination result. That is to say, when the data received from the data relay unit 21 is determined to correspond to the suspension data during the state in which data received from the data relay unit 21 is transmitted to the data block transmission device 30, the subsequently received data is not transmitted to the data block transmission device 30 (transmission being suspended). When the data received from the data relay unit 21 is determined to correspond to the resumption data while transmission is being suspended, the data corresponding to the resumption data (and the subsequently received data) is transmitted to the data block transmission device 30. The data selection transmitter unit 22 transmitting data toward the data block transmission device 30 may transmit the same data to the data analysis device 40 as well. The data selection transmitter unit 22 in another aspect of the second embodiment corresponds to a data transmitter in one or more aspects of the present invention.

The data block transmission device 30 generates data block using data received from the data selection transmitter unit 22 and outputs the data block to the node 51a in the blockchain network 50. The data block transmission device 30 in the modification of the second embodiment may generate data block each time the number of received data pieces reaches a predetermined accumulation number, similarly to the data block transmission device 30 in the first embodiment described above. The data block transmission device 30 may generate data block using previously accumulated data pieces each time the data relay device 20 transmits the suspension data, similarly to the data block transmission device 30 in the second embodiment.

When multiple connections are established in the data relay device 20 in the modification of the second embodiment, data may also be selected for individual connections and transmitted to the data block transmission device 30. In this case, the data block transmission device 30 may or may not generate data block for each connection.

In the data relay system 10 according to the modification of the second embodiment, data relayed by the data relay device 20 is also stored into the nodes 51a to 51d in the blockchain network 50. This system can produce the same effects as the data relay system 10 according to the second embodiment described above.

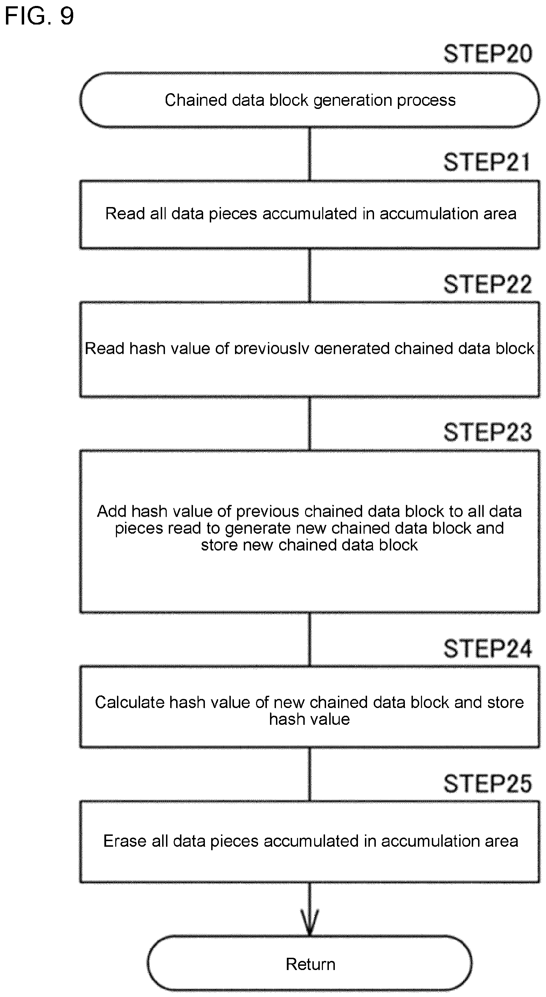

In the second embodiment described above, the node 51a (and each of the nodes 51b to 51d) converts the data block to chained data block and stores the chained data block when the data block transmission device 30 transmits data block to the node 51a. However, the data block transmission device 30 may convert data block to chained data block before transmitting the data block to the node 51a. A process of chained data block generation performed by such a data block transmission device 30 in another aspect of the second embodiment will be briefly described below. FIG. 9 is a flowchart of a chained data block generation process performed by the data block transmission device 30 according to the other aspect of the second embodiment to generate chained data block. This process is performed in place of STEP 14 in the data block transmission process shown in FIG. 5.

At the beginning of the chained data block generation process, all the data pieces accumulated in the accumulation area are read (STEP 21). The hash value of the previously generated chained data block is then read (STEP22). As described later, each time new chained data block is generated, the hash value of the chained data block is calculated and stored.

The hash value of the previous chained data block is then added to all the data pieces read to generate new chained data block. The new chained data block is then stored into a storage area other than the accumulation area that accumulates the data received form the data relay device 20 (STEP 23). Subsequently, the hash value of the newly generated chained data block is calculated and stored into a storage area other than the accumulation area (STEP 24). When the new chained data block and the hash value are stored as described above, all the data pieces accumulated in the accumulation area are erased (STEP 25) for preparation of the next chained data block generation. The chained data block generation process in FIG. 9 ends, and the processing returns to the data block transmission process in FIG. 5. In STEP 15 in the data block transmission process, the data block stored in the storage area in STEP 23 in FIG. 9 is read and transmitted to the node 51a. In the other aspect of the second embodiment, the data block transmission device 30 generates chained data block and transmits the chained data block to the node 51a. The node 51a and the nodes 51b to 51d can thus store data in a blockchain form by simply storing the received chained data block.

The data relay systems 10 according to the various embodiments have been described. However, the present invention is not limited to the above embodiments and may be implemented in various manners without departing from the spirit and scope of the invention.

### REFERENCE SIGNS LIST

- 1: local area network (LAN)
- 2A to 2E: internal terminal
- 3: server
- 5: Internet
- 6A to 6C: external terminal
- 7: server
- 10: data relay system
- 20: data relay device
- 21: data relay unit
- 22: data selection transmitter unit
- 23: storage unit
- 30: data block transmission device
- 30a to 30c: storage area
- 31: data accumulator unit
- 32: storage unit
- 33: data block generator unit
- 34: data block transmitter unit
- 35: data transferrer unit
- 40: data analysis device
- 50: blockchain network
- 51a to 51d: node

## Claims

1. A data relay system for relaying data to be communicated between a plurality of internal terminals and an external terminal, the plurality of internal terminals being processing terminals to communicate data with one another inside a network, the external terminal being a processing terminal outside the network, the data relay system comprising:
a data relay device configured to relay the data between the plurality of internal terminals and the external terminal; and
a data block transmission device connected to the data relay device and to at least one node of a plurality of nodes included in a blockchain network outside the network in which the plurality of internal terminals communicate data with one another, the data block transmission device being configured to receive the data relayed by the data relay device to generate data block being a collection of pieces of the data, and transmit the data block to the at least one node in the blockchain network.

2. The data relay system according to claim 1, wherein
the data relay device relays data to be communicated between a first internal terminal and a second internal terminal of the plurality of internal terminals, and
the data block transmission device generates the data block including the data to be communicated between the first internal terminal and the second internal terminal and transmits the data block to the at least one node.

3. The data relay system according to claim 1 or claim 2, wherein
the data block transmission device includes
a data accumulator unit configured to accumulate the data received from the data relay device,
a data block generator unit configured to generate the data block using the data accumulated in the data accumulator unit,
a data block transmitter unit configured to transmit the data block generated by the data block generator unit to the at least one node, and
a storage unit storing predetermined accumulation suspension data being a piece of the data indicating that accumulation of the data performed by the data accumulator unit is to be suspended and predetermined accumulation resumption data being a piece of the data indicating that suspended accumulation of the data is to be resumed,
the data accumulator unit suspends accumulation of the data and outputs accumulated data to the data block generator unit in response to receiving the accumulation suspension data from the data relay device, and
the data accumulator unit resumes accumulation of the data in response to receiving the accumulation resumption data from the data relay device during suspension of accumulation of the data.

4. The data relay system according to claim 3, wherein
a first processing terminal of the processing terminals establishes a connection with a second processing terminal of the processing terminals before starting communication with the second processing terminal, and the first processing terminal and the second processing terminal having established the connection communicate with each other, and
in response to a new connection being established in parallel with the established connection, the data block transmission device accumulates the data for each connection, generates the data block for each connection, and transmits the data block to the at least one node for each connection.

5. The data relay system according to claim 1 or claim 2, wherein
the data relay device includes
a data transmitter unit configured to transmit the data to the data block transmission device when the data is relayed, and
a storage unit storing predetermined suspension data being a piece of the data indicating that transmission of the data to the data block transmission device is to be suspended and predetermined resumption data being a piece of the data indicating that suspended transmission of the data is to be resumed,
the data transmitter unit suspends transmission of the data to the data block transmission device in response to the data relayed being the suspension data, and
the data transmitter unit resumes transmission of the data to the data block transmission device in response to the data relayed during suspension of transmission of the data being the resumption data.
